# EUROPÄISCHE PATENTSCHRIFT

(11) **EP 3 550 529 B1**
(45) Veröffentlichungstag und Bekanntmachung des Hinweises auf die Patenterteilung: **05.07.2023**
(21) Anmeldenummer: 19162556.5
(22) Anmeldetag: 13.03.2019
(51) Int. Cl.: A47J 31/44, G07C 9/25, G07C 3/00

(54) **SELEKTION VON MELDUNGSEMPFÄNGERN BEI VERNETZTEN HAUSHALTSGERÄTEN**
SELECTION OF MESSAGE RECIPIENTS IN NETWORKED DOMESTIC APPLIANCES
SÉLECTION DE RÉCEPTEURS DE MESSAGES DANS DES APPAREILS ÉLECTROMÉNAGERS EN RÉSEAU

(30) Priorität: 03.04.2018 DE 102018107773
(43) Veröffentlichungstag der Anmeldung: 09.10.2019
(73) Patentinhaber: Miele & Cie. KG, 33332 Gütersloh (DE)
(72) Erfinder: Metz, Thomas, 32257 Bünde (DE)

(56) Entgegenhaltungen:
- DE-A1-102014 108 498
- DE-A1-102015 108 696
- US-A1- 2004 160 335
- US-A1- 2005 140 506
- US-A1- 2016 373 270

## Beschreibung

Die Erfindung betrifft ein Verfahren für den Betrieb eines vernetzten Haushaltsgeräts sowie ein solches Haushaltsgerät, wobei Statusmeldungen selektiv an eines oder mehrere ausgewählte mobile Endgeräte gesendet werden. Insbesondere betrifft die Erfindung ein solche Verfahren sowie Haushaltsgerät, bei dem bei Bedienvorgängen eine Zuordnung zu einem mobilen Endgerät vorgenommen wird.

Bei Wäschepflegegeräten, die häufig in einem Keller oder Hauswirtschaftsraum aufgestellt sind, aber auch bei einem Geschirrspüler oder einem Gargerät muss der Benutzer üblicherweise vor Ort sein bzw. sich zum Gerät begeben, um zu sehen, wie lange ein bestimmtes Behandlungsprogramm noch dauern wird. Bei vollintegrierten Geschirrspülern oder auch bei hinter Türen eingebauten Wäschepflegegeräten kann der Benutzer selbst in Anwesenheit bei dem Gerät nicht ohne Weiteres die genaue verbleibende Laufzeit ersehen; hier ist eine Öffnung des Geräts bzw. der Tür erforderlich. Dies gilt analog für alle (optisch dargestellten) Statusmeldungen des Geräts.

Moderne Haushaltsgeräte können zur Lösung dieses Problems vernetzungsfähig sein, um derartige Statusmeldungen auf mobilen Endgeräten auszugeben. In einem Haushalt mit mehreren Bewohnern bzw. Benutzern der Haushaltsgeräte kann jeder Benutzer ein oder mehrere mobile Endgeräte wie Smartphones, Tablets, Smartwatches oder allgemein "Wearables" an einem Haushaltsgerät anmelden, um Statusmeldungen zu erhalten. Dies führt herkömmlicherweise jedoch dazu, dass stets jedes an dem Haushaltsgerät angemeldete mobile Endgerät die gleiche Statusmeldung erhält. Eine Selektion hinsichtlich des relevanten Empfängers der Statusmeldung findet nicht statt.

Dies ist insofern sehr unkomfortabel, da dann auch Benutzer Statusmeldungen erhalten, die einen Behandlungsvorgang betreffen, der von einem anderen Benutzer gestartet wurde. Das wird in der Regel für diese Benutzer, die den Vorgang nicht gestartet haben, nicht von Interesse sein. Die irrelevanten Meldungen können leicht als störend empfunden werden, da sie trotz nicht gegebener Relevanz für einen bestimmten Benutzer auf dessen mobilem Endgerät angezeigt werden und seine Aufmerksamkeit wahrscheinlich unnötig beanspruchen.

Aus der DE 10 2015 108696 A1 ist ein Verfahren zum Übertragen einer von einem Haushaltsgerät bereitgestellten Information an ein mobiles Endgerät bekannt, in dem ein eine Entfernung zwischen dem mobilen Endgerät und dem Haushaltsgerät repräsentierender Entfernungswert eingelesen wird. Die Information wird an das mobile Endgerät gesendet, wenn der Entfernungswert geringer als ein Referenzwert ist.

Aus der DE 10 2014 108498 A1 ist bekannt, in Abhängigkeit von einem eine Position eines Nutzers eines Mobilgeräts anzeigenden Positionssignal und/oder von einem eine Position des Mobilgeräts anzeigenden weiteren Positionssignal ein Statussignal eines Haushaltsgeräts auf dem Haushaltsgerät oder dem Mobilgerät auszugeben.

Aus der US 2005/140506 A1 ist eine Fernüberwachung von Haushaltsgeräten bekannt Aus der US 2004/160335 A1 ist eine biometrische Erkennung eines Benutzers eines Haushaltsgeräts anhand eines Fingerabdrucks bekannt.

Aus der US 2016/373270 ist ein Verbindungsaufbau zwischen einem Haushaltsgerät und einem mobilen Endgerät bekannt.

Die Erfindung hat daher die Aufgabe, ein verbessertes Verfahren und Haushaltsgerät bereitzustellen, bei dem in einer Umgebung mit mehreren Benutzern in einem Haushalt Statusmeldungen nur noch an ausgewählte Endgeräte von Benutzern gesendet werden, um unnötige Störungen anderer Benutzer zu verhindern. Die Aufgabe wird gelöst durch ein Verfahren und ein Haushaltsgerät gemäß den unabhängigen Ansprüchen. Vorteilhafte Ausführungsformen werden in den abhängigen Ansprüchen angegeben.

Erfindungsgemäß soll ein Weg aufgezeigt werden, wie Haushaltsgeräte in einem Haushalt mit mehreren Nutzern eine komfortable Bedienung ermöglichen, ohne dass unbeteiligte Nutzer Meldungen zu Prozessen bekommen, die sie nicht betreffen. Dabei wird davon ausgegangen, dass Haushaltsgeräte wie Küchengeräte oder Wäschepflegegeräte von mehreren Personen im Haushalt verwendet werden. Jede dieser Personen kann ein persönliches mobiles Endgerät an den Geräten anmelden, was heute zur Folge hat, dass nicht personalisierte Meldungen an alle angemeldeten Benutzer bzw. mobilen Endgeräte geschickt werden. Das wird in der Regel als störend empfunden.

Meldungen an nicht betroffene Personen sollen daher vermieden werden. Das soll dadurch gelöst werden, dass Gar- oder Wäschepflege-Prozesse einzelnen Benutzern zugeordnet werden und nur diese Personen bzw. ihnen zugeordnete mobile Endgeräte Meldungen zum jeweiligen Prozess erhalten.

Dadurch, dass in Gar- oder Wäschpflege-Prozessen immer physische Gegenstände prozessiert werden, muss der Nutzer auch stets Aktionen direkt am Gerät ausführen. Beispielsweise muss ein Lebensmittel in einen Backofen geschoben werden, oder Wäsche muss in eine Waschmaschine gefüllt werden. Der Nutzer führt daher Aktionen direkt am Gerät aus, was erfindungsgemäß zur Identifikation und Zuordnung der Identität zu einem Prozess sowie zu einem betreffenden mobilen Endgerät ausgenutzt werden kann.

Gemäß einer Ausführungsform weist das Haushaltsgerät einen mit einer Tür verschließbaren Behandlungsraum auf und umfasst das Erfassen einer manuellen Handlung das Erfassen einer Türbetätigung.

Da in diesem Fall zum Start eines Behandlungsvorgangs die Tür des Geräts mindestens einmal bewegt werden muss, ist eine einfache Möglichkeit gegeben, die manuelle Handlung zu erfassen, beispielsweise mittels eines Türsensors. Fälle für die manuelle Handlung schließen beispielsweise das Einstellen eines Garguts, von Wäsche oder von Geschirr ein.

Gemäß einer Ausführungsform umfasst das Verfahren weiter
- Erfassen von einem oder mehreren mobilen Endgeräten in Kommunikationsreichweite einer kurzreichweitigen drahtlosen Schnittstelle des Haushaltsgeräts, wobei als Meldungsempfänger zugeordnet wird:
- das erfasste mobile Endgerät, das dem Haushaltsgerät am nächsten ist.

Gemäß der Erfindung werden bestimmte Sensoren oder auch Kombinationen von Sensoren eingesetzt, um komfortabel und sicher eine Identifizierung der Bedienperson zwecks Zuordnung zu einem mobilen Endgerät zu gewährleisten. Es können dazu Sensoren verwendet werden, die bereits alleine eine Identifizierung ermöglich, beispielsweise ein Fingerabdrucksensor. Dieser könnte in eine Bedientaste integriert werden, die von einem Benutzer ohnehin betätigt werden muss, beispielsweise der Ein-/Ausschalter oder eine Starttaste.

Es können aber auch teils bereits vorhandene Sensoren des Haushaltsgeräts in Kombination mit einer kurzreichweitigen Sende-/Empfangsvorrichtung verwendet werden. Beispielsweise könnte das Haushaltsgerät bei Erkennen einer Türöffnung über einen Türkontaktschalter oder anderen Türsensor mittels der kurzreichweitigen Sende-/Empfangsvorrichtung mobile Endgeräte in der näheren Umgebung erfassen und die Zuordnung zu dem am nächsten gelegenen mobilen Endgerät erstellen, da dieses mit der größten Wahrscheinlichkeit dem anwesenden Benutzer gehört. Optional können auch mehrere oder alle in der Nähe befindlichen mobilen Endgeräte zugeordnet werden.

Eine Plausibilitätsprüfung kann vorgeschaltet werden. So würde es keinen Sinn machen, das nächste mobile Endgerät einem Benutzer zuzuordnen, wenn es so weit von dem Haushaltsgerät entfernt ist, dass es wahrscheinlich nicht von dem Benutzer bei sich geführt werden kann, der gerade am Haushaltsgerät eine Bedienhandlung ausführt.

Gemäß einer Ausführungsform umfasst das Erfassen einer manuellen Handlung das Erfassen eines persönlichen Merkmals des Benutzers umfasst, wobei das persönliche Merkmal mindestens eines einschließt von
- optisches Merkmal;
- akustisches Merkmal;
- biometrisches Merkmal.

Das optische Merkmal kann beispielsweise das Gesicht eines Benutzers sein. Da eine solche Identifizierung auch auf Bedenken bei Benutzern stoßen könnte, die eine Überwachung fürchten, wären auch weniger detaillierte optische Merkmale wie Statur und Größe denkbar.

Das akustische Merkmal kann beispielsweise die Stimme eines Benutzers sein. Da eine solche Identifizierung auch auf Bedenken bei Benutzern stoßen könnte, die eine Überwachung fürchten, wären auch weniger detaillierte akustische Merkmale wie etwa das persönliche akustische Schrittmuster oder die Tonlage denkbar.

Das biometrische Merkmal kann beispielsweise ein Fingerabdruck sein. Bevorzugt kann ein Fingerabdruckleser in ein Bedienelement integriert werden, das für den Behandlungsvorgang betätigt werden muss.

Gemäß einer Ausführungsform umfasst das Verfahren weiter
- Identifizieren eines Benutzers anhand des persönlichen Merkmals.

Gemäß einer Ausführungsform umfasst das Verfahren weiter
- Zugreifen auf eine interne und/oder externe Datenbank, die Verknüpfungen zwischen Benutzern und mobilen Endgeräten speichert; und
wobei das oder die mobilen Endgeräte des identifizierten Benutzers als Meldungsempfänger zugeordnet werden.

Die Datenbank zur Zuordnung von Benutzern und damit verknüpften mobilen Endgeräten kann intern gespeichert werden, alternativ oder zusätzlich kann sie jedoch auch extern vorgehalten werden, beispielsweise in einer Firmen-Cloud. Optional kann eine interne Datenbank als temporärer Zwischenspeicher für einige oder alle Einträge in der externen Datenbank verwendet werden. Das ermöglicht eine Zuordnung von mobilen Endgeräten auch während eines Ausfalls der externen Netzverbindung.

Gemäß einer Ausführungsform umfasst das Verfahren weiter
- Senden einer Statusmeldung an alle mobilen Endgeräte, die in der Datenbank gespeichert sind, falls für eine vorgebbare Zeitspanne nach dem Senden der Statusmeldung keine manuelle Handlung erfasst wird.

In bestimmten Fällen kann es ratsam sein, eine Statusmeldung nicht nur an das aktuell zugeordnete mobile Endgerät zu senden, sondern an alle, die dem Haushaltsgerät bekannt sind. Insbesondere bei Fehlermeldungen oder wichtigen VVarnmeldungen, die eine möglichst umgehende Behebung erfordern, kann so die Wahrscheinlichkeit erhöht werden, dass ein Benutzer eines der mehreren mobilen Endgeräte aufmerksam wird und den Fehler schnell behebt.

Gemäß einer Ausführungsform umfasst das Verfahren weiter
- Senden einer Liste weiterer Benutzer zusammen mit einer Statusmeldung, die eine manuelle Handlung anfordert, um es dem Benutzer zu ermöglichen, diese Statusmeldung an einen der weiteren Benutzer weiterzuleiten.

Die Schnittstelle zum Senden von Statusmeldungen kann eine drahtgebundene Schnittstelle wie Ethernet sein, oder auch eine drahtlose Schnittstelle wie WLAN. Denkbar sind auch Kombinationen, etwa eine Ethernet-Verbindung des Haushaltsgeräts mit einem WLAN-Router, wobei der WLAN-Router die Statusmeldungen an das mobile Endgerät (weiter) sendet.

Gemäß einer Ausführungsform weist das Haushaltsgerät einen mit einer Tür verschließbaren Behandlungsraum und einen Türsensor auf, und umfasst das Erfassen einer manuellen Handlung das Erfassen einer Türbetätigung.

Gemäß einer Ausführungsform weist das Haushaltsgerät eine kurzreichweitige drahtlose Schnittstelle auf, wobei die Steuereinheit weiter eingerichtet ist zum
- Erfassen von einem oder mehreren mobilen Endgeräten in Kommunikationsreichweite einer kurzreichweitigen drahtlosen Schnittstelle des Haushaltsgeräts, wobei als Meldungsempfänger zugeordnet werden:
- das erfasste mobile Endgerät, das dem Haushaltsgerät am nächsten ist.

Erfindungsgemäß kann als Maß für die Entfernung von dem Haushaltsgerät die empfangene Signalstärke verwendet werden. Je größer die Signalstärke, desto näher wird sich das mobile Endgerät in der Regel befinden. Die kurzreichweitige Schnittstelle kann Bestandteil der Schnittstelle zum Senden von Statusmeldungen sein oder diese ergänzen. RFID, NFC, Bluetooth, oder andere kurzreichweitige Funkschnittstellen kommen in Frage.

Gemäß einer Ausführungsform weist das Haushaltsgerät weiter einen optischen, akustischen oder biometrischen Sensor auf, wobei das Erfassen der manuellen Handlung das Erfassen eines persönlichen Merkmals des Benutzers umfasst, wobei das persönliche Merkmal mindestens eines einschließt von
- optisches Merkmal;
- akustisches Merkmal;
- biometrisches Merkmal.

Das Erfassen des persönlichen Merkmals ist eine einfach und zielgerichtete Möglichkeit, die Anwesenheit eines Benutzers am Haushaltsgerät mit hoher Zuverlässigkeit zu erfassen. Gemäß einer Ausführungsform ist die Steuereinheit weiter eingerichtet zum
- Identifizieren eines Benutzers anhand des persönlichen Merkmals.

Gemäß einer Ausführungsform weist das Haushaltsgerät weiter auf:
- eine interne Datenbank und/oder externe Datenbank und eine Schnittstelle zu der externen Datenbank, wobei die interne oder externe Datenbank Verknüpfungen zwischen Benutzern und mobilen Endgeräten speichert; und
   wobei die Steuereinheit weiter eingerichtet ist zum
- Zugreifen auf die interne und/oder die externe Datenbank; und
wobei das oder die mobilen Endgeräte des identifizierten Benutzers als Meldungsempfänger zugeordnet werden.

Das Haushaltsgerät kann eine eigene, interne Datenbank aufweisen. Alternativ kann es auch, z.B. über eine Netzwerk- oder Internetverbindung, eine externe Datenbank dazu verwenden. Eine Kombination ist ebenfalls möglich. Durch die Möglichkeit der Modifizierung bereits vorhandener Einträge in der/den Datenbank(en) ist eine komfortable Verwaltung gegeben. Wenn Benutzer zusätzliche und/oder neue mobile Endgeräte verwenden, werden diese automatisch erfasst, sobald Benutzer zugeordnet werden, ohne die Notwendigkeit einer manuellen Verwaltung.

Gemäß einer Ausführungsform ist das Haushaltsgerät ein Geschirrspüler, eine Waschmaschine, ein Trockner oder ein Gargerät.

Das Haushaltsgerät kann weiter dazu eingerichtet sein, falls durch eine vorgenommene manuelle Handlung der Anlass für eine vorher gesendete Statusmeldung, die eine manuelle Handlung anfordert, beseitigt wurde, diese Statusmeldung auf allen zugeordneten mobilen Endgeräten zu löschen bzw. zu widerrufen. Dies ist insbesondere dann nützlich, wenn bei einer Fehlermeldung oder Warnmeldung die vorher gesendete Statusmeldung an alle dem Haushaltsgerät bekannten mobilen Endgeräte gesendet wurde. Um unnötige Störungen unbeteiligter Benutzer zu minimieren, kann nach Erkennen einer Behebung des Fehlers diese Statusmeldung gelöscht bzw. widerrufen werden.

Das Haushaltsgerät kann weiter dazu eingerichtet sein, bei Ausbleiben einer manuellen Handlung für eine vorgebbare Zeitspanne nach einer Statusmeldung, die eine manuelle Handlung anfordert, diese Statusmeldung an alle mobilen Endgeräte zu senden, die Benutzern zugeordnet sind. Wenn innerhalb einer vorgebbaren Zeitspanne keine Reaktion auf eine Statusmeldung erfolgt, kann vorgesehen sein, den Kreis der Empfänger zu vergrößern, um die Wahrscheinlichkeit einer Reaktion zu erhöhen. Beispielsweise könnte eine Statusmeldung, die den Abschluss eines Garvorgangs angibt, bei Ausbleiben einer Reaktion an weitere oder alle anderen bekannten mobilen Endgeräte gesendet werden, um ein Übergaren des Lebensmittels zu verhindern oder zumindest zu minimieren. Analoges gilt beispielsweise für einen abgeschlossenen Waschvorgang, der ein Herausnehmen der Wäsche zum Trocknen erfordert. Zu langes Verweilen in der Waschmaschine im noch feuchten Zustand kann zu Geruchsbildung, Stockflecken oder gar Schimmel führen.

Das Haushaltsgerät kann weiter dazu eingerichtet sein, zusammen mit einer Statusmeldung, die eine manuelle Handlung anfordert, eine Liste weiterer Benutzer zu senden, um dem Benutzer zu ermöglichen, die Statusmeldung an einen der weiteren Benutzer weiterzuleiten.

Das Haushaltsgerät kann weiter dazu eingerichtet sein, eine Information über erfolgte Weiterleitungen zu empfangen und folgende Statusmeldungen so lange an das mobile Endgerät zu senden, an das die vorherige Statusmeldung weitergeleitet wurde, bis eine manuelle Handlung am Haushaltsgerät erfolgt. Sofern eine Weiterleitung seitens des Benutzers erfolgte und dem Haushaltsgerät mitgeteilt wurde, kann das Haushaltsgerät folgende Statusmeldungen an das mobile Endgerät senden, an das die Weiterleitung erfolgte. Das betreffende mobile Endgerät kann, muss dem Haushaltsgerät aber nicht bekannt gewesen sein, mithin also nicht zwingend einem Benutzer zugewiesen sein.

Das Haushaltsgerät kann weiter dazu eingerichtet sein, eine Anforderung für eine Statusmeldung von einem mobilen Endgerät zu empfangen und in Reaktion eine Statusmeldung an das anfordernde mobile Endgerät zu senden. Zusätzlich können Anforderungen von Statusmeldungen auch von einem externen mobilen Endgerät erfolgen. Dieses Endgerät muss nicht zwingend dem Haushaltsgerät bekannt gewesen sein, also auch nicht zwingend einem Benutzer zugewiesen sein.

Kurze Beschreibung der Figuren
- Fig. 1: zeigt schematisch eine Ausführungsform eines Haushaltsgeräts gemäß der Erfindung; und
- Fig. 2: zeigt in Form eines Flussdiagramms eine Ausführungsform des Verfahrens der Erfindung.

### Detaillierte Beschreibung der Erfindung

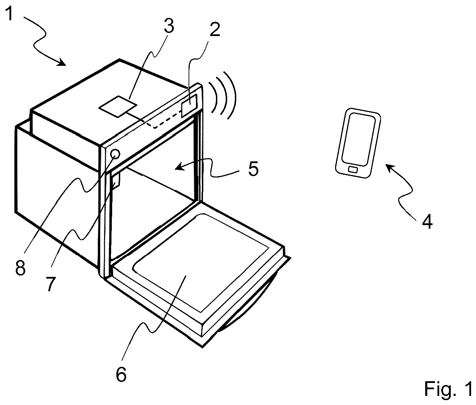

In Figur 1 ist schematisch eine beispielhafte Ausführungsform eines Haushaltsgeräts dargestellt. Bei dem Haushaltsgerät 1 handelt es sich beispielsweise um ein Gargerät wie einen Backofen, einen Mikrowellenofen oder einen Dampfgarer. Ebenfalls möglich sind auch andere Haushaltsgeräte (nicht gezeigt), wie beispielsweise ein Geschirrspüler, ein Waschautomat oder ein Trockner. Grundsätzlich ist die Erfindung anwendbar auf alle Haushaltsgeräte, die Behandlungsprogramme zur Behandlung von Behandlungsgut ausführen können, die mindestens eine manuelle Handlung eines Benutzers erfordern. Bei der manuellen Handlung kann es sich beispielsweise um das Einstellen/Einfüllen von Behandlungsgut wie Geschirr, Gargut oder Wäsche handeln.

Das Gargerät 1 weist eine Steuereinheit 3 und eine Schnittstelle 2 zum Senden von Statusmeldungen von Behandlungsprogrammen auf. Die Schnittstelle 2 ist hier beispielshaft eine drahtlose Schnittstelle wie etwa WLAN (IEEE 802.11). Alternativ (nicht gezeigt) kann es sich hierbei auch um andere Funkschnittstellen wie ZigBee, Bluetooth etc. handeln, oder es kann sich auch um eine drahtgebundene Schnittstelle wie etwa Ethernet handeln. Statusmeldungen können von einem mobilen Endgerät wie einem beispielhaft gezeigten Smartphone 4 empfangen werden. Dies muss erfindungsgemäß nicht zwingend direkt mittels einer drahtlosen Verbindung zwischen Gargerät 1 und Smartphone 4 erfolgen, auch wenn dies eine bevorzugte Ausführung ist. Es ist ebenso möglich, dass das Gargerät 1 über die Schnittstelle 2 mit einem Router verbunden ist, der wiederum die Statusmeldungen an das Smartphone 4 (weiter) sendet.

Das Gargerät 1 weist weiterhin einen Behandlungsraum 5 mit einer Tür 6 auf. Der Behandlungsraum 5 kann mittels der Tür 6 verschlossen werden, ist in Fig. 1 jedoch im geöffneten Zustand gezeigt.

Das Gargerät 1 weist weiterhin ein manuelles Bedienelement 8, beispielsweise eine Ein-/Aus-Taste auf. Damit ist es sehr einfach möglich, einen Benutzer zu erfassen, der das Gargerät 1 einschaltet, wofür er wiederum vor Ort sein muss. In diesem Fall kann mittels der Schnittstelle 2 eine Suche nach in der Umgebung des Gargeräts 1 befindlichen mobilen Endgeräten ausgeführt werden. Das am nächsten gelegene mobile Endgerät 4 wird dann mit großer Wahrscheinlichkeit dem Benutzer gehören, der soeben das Bedienelement 8 betätigt hat. Es kann daher als Empfänger für Statusmeldungen zugeordnet werden.

Optional ist es möglich, in das Bedienelement 8 einen Sensor für ein biometrisches Merkmal zu integrieren, wie beispielsweise einen Fingerabdruckleser. Damit ist es über die reine Erfassung eines Benutzers möglich, den Benutzer zu identifizieren. Dazu kann das Gargerät 1 sich einer internen oder externen (beides nicht gezeigt) Datenbank zu bedienen, in der Benutzer mit mobilen Endgeräten verknüpft sind. In diesem Fall kann eine Suche mittels der Schnittstelle 2 nach mobilen Endgeräten entfallen. Das hat den Vorteil, dass der Benutzer auch dann die Statusmeldungen erhalten wird, selbst wenn er sein mobiles Endgerät etwa in einem anderen Raum (Wohnzimmer) gelassen hat, so dass eine Suche danach erfolglos wäre bzw. andere, nicht dem Benutzer gehörende mobile Endgerät, fälschlich zugeordnet würden, da sie sich ggf. näher am Gargerät 1 befinden.

Ferner ist ein Sensor 7 vorgesehen, der das Öffnen/Schließen der Tür 6 sensieren kann. Auch hiermit kann sensiert werden, dass ein Benutzer sich an dem Gargerät befindet. Eine Zuordnung eines mobilen Endgeräts kann dann analog wie zuvor beschrieben erfolgen.

Es sollte klar sein, dass hier beispielhaft beschriebene Merkmale wie drahtlose Schnittstelle, Bedienelement, biometrischer Sensor oder Türöffnungssensor sowohl getrennt voneinander als auch in Kombination vorgesehen werden können. Grundsätzlich sind zwei Hauptvarianten der Erfindung möglich:
1) Erfassen einer manuellen Handlung, Identifizieren des Benutzers und Zuordnen eines mobilen Endgeräts über eine Datenbankverknüpfung; oder
2) Erfassen einer manuellen Handlung und Zuordnen eines sensierten mobilen Endgeräts.

Fall 1) erfordert das Vorliegen einer Verknüpfung zwischen dem sensierten Benutzer und einem oder mehreren mobilen Endgeräten. Diese Verknüpfung kann auf herkömmlichem Weg erfolgen, beispielsweise indem der Benutzer mittels einer App sein mobiles Endgerät mit einem Konto verknüpft, wobei das Konto wiederum mit dem jeweiligen Haushaltsgerät verknüpft ist.

In Fall 2) muss keine Identifizierung des Benutzers erfolgen. Eine optionale Identifizierung kann jedoch auch hier nützlich sein, da hiermit bisher nicht dem Benutzer zugeordnete mobile Endgeräte komfortabel erfasst und in der Datenbank verknüpft werden können. Eine manuelle Verknüpfung durch den Benutzer kann dann entfallen.

Mit der Erfindung wird es möglich, dass außer der erfassten manuellen Handlung - die beispielsweise im Erfassen einer Türbewegung bestehen kann - keine weiteren Bedienhandlungen am Gerät nötig sind. Die weitere Bedienung kann vollständig auf dem zugeordneten mobilen Endgerät erfolgen. Dazu kann es vorgesehen sein, dass Bedieneingaben nur über das zugeordnete mobile Endgerät zugelassen werden. Das gilt allgemein für alle Ausführungsformen der Erfindung, dass optional eine Fernsteuerung des Haushaltsgeräts nur über das jeweils aktuell zugeordnete oder die zugeordneten mobilen Geräte erlaubt wird. Das Abrufen von Statusmeldungen ohne Bedienung kann optional dennoch weiter auch über ein beliebiges nicht zugeordnetes mobiles Endgerät erfolgen.

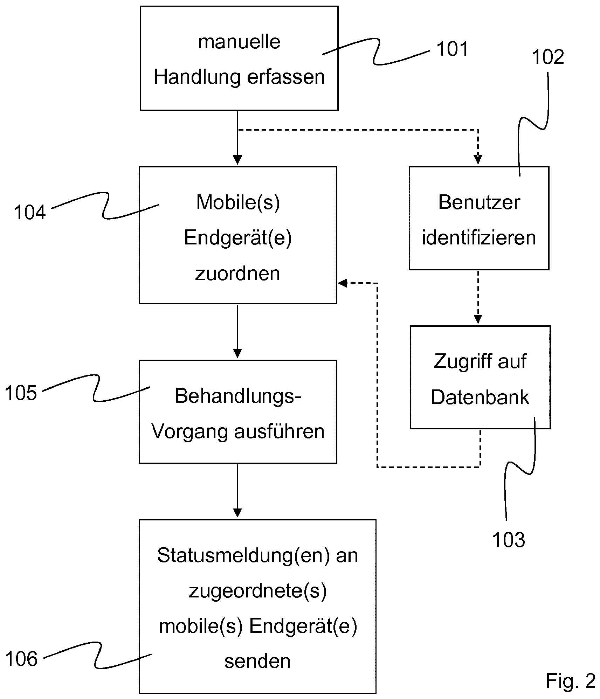

In Figur 2 ist eine Ausführungsform eines erfindungsgemäßen Verfahrens gezeigt. In Schritt 101 wird eine manuelle Handlung eines Benutzers erfasst. In Schritt 104 wird ein mobiles Endgerät (oder ggf. mehrere mobile Endgerät) zugeordnet, um Statusmeldungen des Haushaltsgeräts zu senden.

Optional kann in Schritt 102 eine Identifizierung des Benutzers erfolgen, der die manuelle Handlung getätigt hat. Dazu erfolgt in Schritt 103 ein Zugriff auf eine (interne oder externe) Datenbank, in der Verknüpfungen zwischen Benutzern und mobilen Endgeräten gespeichert sind.

In Schritt 105 wird ein Behandlungsvorgang ausgeführt. Bei dem Behandlungsvorgang kann es sich beispielsweise um einen Garvorgang, einen Geschirrspülvorgang oder einen Wasch- oder Trockenvorgang handeln. Statusmeldungen des Behandlungsvorgangs werden in Schritt 106 an das/die zugeordneten mobile(n) Endgerät(e) gesendet. Bei Statusmeldungen kann es sich beispielsweise um eine der folgenden Meldungen handeln:
- Behandlungsvorgang abgeschlossen
- manuelle Aktion zur Fortführung erforderlich

Nachdem eine Meldung am mobilen Endgerät gelesen (bestätigt) wird oder am Haushaltsgerät eine entsprechende Aktion durchgeführt wird (Wasser nachfüllen), wird sie auf allen mobilen Endgeräten des Benutzers gelöscht. Reagiert der Benutzer nicht, was durch fehlende Aktionen am mobilen Endgerät oder am Haushaltsgerät, z.B. bei Wassermangel, sensiert werden kann, wird die Meldung an alle angemeldeten Benutzer bzw. mobilen Endgeräte geschickt. Sollte ein Benutzer gerade verhindert sein, um auf eine Meldung zu reagieren, kann er die Meldungen an einen anderen Benutzer weiterleiten, welcher dann die erforderliche Aktion ausführt.

Dafür kann es in der App eine Auswahlliste aller am Gerät angemeldeten Personen bzw. Endgeräte geben. Beispiel: Ein Braten ist seit einer Stunde im Ofen und muss gewendet werden. Der Benutzer, der am Gerät identifiziert wurde, bzw. sein zugeordnetes Endgerät befindet sich gerade im Garten. Aus den am Gerät angemeldeten Personen wählt der Benutzer eine Person aus, an die die Meldung weitergeleitet wird. Alle folgenden Statusmeldungen werden weiterhin an den am Gerät identifizierten Benutzer bzw. dessen mobiles Endgerät geschickt. Sollte der ursprüngliche Benutzer dauerhaft abwesend sein, kann der Prozess an einen anderen angemeldeten Benutzer komplett abgegeben werden. Dieser Benutzer bekommt fortan alle zum Prozess gehörigen Meldungen. Der ursprüngliche Benutzer bekommt keine den Prozess betreffenden Meldungen mehr. Schwerwiegende Fehler werden sofort an alle angemeldeten Benutzer geschickt.

Sollte der Kochprozess durch eine externe Hardware geplant worden sein, z.B. auf einem Tablet während der Erstellung eines Wochen-Essens-Plans, kann der Benutzer auch über das mobile Endgerät bzw. den angemeldeten Benutzer auf dem mobilen Endgerät identifiziert werden. Der Haushaltsgerätestatus wird in der App angezeigt, jedoch nur bei dem Benutzer, der sich am Gerät identifiziert hat. Alle weiteren Benutzer können sich bei Bedarf den Status aktiv holen. In Haushalten mit erwachsenen Kindern oder WGs kann man sehen, wer wann welche Geräte benutzen möchte und sich im Vorfeld über die Nutzung abstimmen.

## Patentansprüche

1. Verfahren, umfassend:
- Erfassen (101) mindestens einer manuellen Handlung eines Benutzers an einem Haushaltsgerät (1) zum Starten eines Behandlungsvorgangs in dem Haushaltsgerät;
- Zuordnen (104), in Reaktion auf das Erfassen, eines oder mehrerer mobiler Endgeräte (4) des Benutzers als Meldungsempfänger;
- Ausführen (105) des Behandlungsvorgangs in dem Haushaltsgerät (1); und
- Senden (106) von Statusmeldungen des Behandlungsvorgangs nur an die zugeordneten mobilen Endgeräte (4); wobei der Schritt des Zuordnen eines oder mehrerer mobiler Endgeräte des Benutzers als Meldungsempfänger umfasst:
- Erfassen von einem oder mehreren mobilen Endgeräten (4) in Kommunikationsreichweite einer kurzreichweitigen drahtlosen Schnittstelle (2) des Haushaltsgeräts (1), wobei als Meldungsempfänger das erfasste mobile Endgerät (4), das dem Haushaltsgerät am nächsten ist, zugeordnet wird.

2. Verfahren nach Anspruch 1, wobei das Haushaltsgerät einen mit einer Tür (6) verschließbaren Behandlungsraum (5) aufweist und das Erfassen einer manuellen Handlung das Erfassen einer Türbetätigung umfasst.

3. Verfahren nach einem der vorhergehenden Ansprüche, wobei das Erfassen einer manuellen Handlung das Erfassen eines persönlichen Merkmals des Benutzers umfasst, wobei das persönliche Merkmal mindestens eines einschließt von
- optisches Merkmal;
- akustisches Merkmal;
- biometrisches Merkmal.

4. Verfahren nach Anspruch 3, weiter umfassend
- Identifizieren (102) eines Benutzers anhand des persönlichen Merkmals.

5. Verfahren nach Anspruch 4, weiter umfassend
- Zugreifen (103) auf eine interne und/oder externe Datenbank, die Verknüpfungen zwischen Benutzern und mobilen Endgeräten speichert; und wobei das oder die mobilen Endgeräte (4) des identifizierten Benutzers als Meldungsempfänger zugeordnet werden.

6. Verfahren nach Anspruch 5, weiter umfassend
- Senden einer Statusmeldung an alle mobilen Endgeräte (4), die in der Datenbank gespeichert sind, falls für eine vorgebbare Zeitspanne nach dem Senden der Statusmeldung keine manuelle Handlung erfasst wird.

7. Verfahren nach Anspruch 5 oder 6, weiter umfassend
- Senden einer Liste weiterer Benutzer zusammen mit einer Statusmeldung, die eine manuelle Handlung anfordert, um es dem Benutzer zu ermöglichen, diese Statusmeldung an einen der weiteren Benutzer weiterzuleiten.

8. Haushaltsgerät (1), aufweisend eine Schnittstelle (2) zum Senden von Statusmeldungen und eine Steuereinheit (3), die eingerichtet ist zum
- Erfassen (101) mindestens einer manuellen Handlung eines Benutzers an einem Haushaltsgerät zum Starten eines Behandlungsvorgangs in dem Haushaltsgerät;
- Zuordnen (104), in Reaktion auf das Erfassen, eines oder mehrerer mobiler Endgeräte (4) des Benutzers als Meldungsempfänger;
- Ausführen (105) des Behandlungsvorgangs in dem Haushaltsgerät (1); und
- Senden (106) von Statusmeldungen des Behandlungsvorgangs nur an die zugeordneten mobilen Endgeräte (4), wobei der Schritt des Zuordnen eines oder mehrerer mobiler Endgeräte des Benutzers als Meldungsempfänger umfasst:
- Erfassen von einem oder mehreren mobilen Endgeräten (4) in Kommunikationsreichweite der kurzreichweitigen drahtlosen Schnittstelle (2) des Haushaltsgeräts, wobei als Meldungsempfänger das erfasste mobile Endgerät (4), das dem Haushaltsgerät (1) am nächsten ist, zugeordnet wird.

9. Haushaltsgerät (1) nach Anspruch 8, wobei das Haushaltsgerät (1) einen mit einer Tür (6) verschließbaren Behandlungsraum (5) und einen Türsensor (7) aufweist, und wobei das Erfassen einer manuellen Handlung das Erfassen einer Türbetätigung umfasst.

10. Haushaltsgerät (1) nach einem der Ansprüche 8 bis 9, weiter aufweisend einen optischen, akustischen oder biometrischen Sensor, wobei das Erfassen der manuellen Handlung das Erfassen eines persönlichen Merkmals des Benutzers umfasst, wobei das persönliche Merkmal mindestens eines einschließt von
- optisches Merkmal;
- akustisches Merkmal;
- biometrisches Merkmal.

11. Haushaltsgerät (1) nach Anspruch 10, wobei die Steuereinheit weiter eingerichtet ist zum
- Identifizieren (102) eines Benutzers anhand des persönlichen Merkmals.

12. Haushaltsgerät (1) nach Anspruch 11, weiter aufweisend:
- eine interne Datenbank und/oder externe Datenbank und eine Schnittstelle zu der externen Datenbank, wobei die interne oder externe Datenbank Verknüpfungen zwischen Benutzern und mobilen Endgeräten (4) speichert; und
wobei die Steuereinheit (3) weiter eingerichtet ist zum
- Zugreifen (103) auf die interne und/oder die externe Datenbank; und
wobei das oder die mobilen Endgeräte (4) des identifizierten Benutzers als Meldungsempfänger zugeordnet werden.

13. Haushaltsgerät (1) nach einem der Ansprüche 8 bis 12, wobei das Haushaltsgerät (1) ein Geschirrspüler, eine Waschmaschine, ein Trockner oder ein Gargerät ist.

## Claims

1. Method comprising:
- detecting (101) at least one manual action of a user on a domestic appliance (1) for starting a treatment process in the domestic appliance;
- assigning (104), in response to the detection, one or more mobile terminals (4) of the user as a message recipient;
- performing (105) the treatment process in the domestic appliance (1); and
- sending (106) status messages of the treatment process only to the assigned mobile terminals (4);
wherein the step of assigning one or more mobile terminals of the user as a message recipient comprises:
- detecting one or more mobile terminals (4) within communication range of a short-range wireless interface (2) of the domestic appliance (1), wherein the detected mobile terminal (4) that is closest to the domestic appliance is assigned as the message recipient.

2. Method according to claim 1, wherein the domestic appliance comprises a treatment chamber (5) that can be closed by a door (6), and the detection of a manual action comprises detecting door operation.

3. Method according to either of the preceding claims, wherein the detection of a manual action comprises detecting a personal feature of the user, wherein the personal feature includes at least one of
- optical feature;
- acoustic feature;
- biometric feature.

4. Method according to claim 3, further comprising
- identifying (102) a user on the basis of the personal feature.

5. Method according to claim 4, further comprising:
- accessing (103) an internal and/or external database that stores links between users and mobile terminals; and
wherein the mobile terminal(s) (4) of the identified user are assigned as the message recipient.

6. Method according to claim 5, further comprising
- sending a status message to all mobile terminals (4) stored in the database if no manual action is detected for a specifiable period after sending the status message.

7. Method according to either claim 5 or claim 6, further comprising
- sending a list of further users together with a status message requesting a manual action in order to enable the user to forward this status message to one of the further users.

8. Domestic appliance (1) comprising an interface (2) for sending status messages and a control unit (3) which is configured to
- detect (101) at least one manual action of a user on a domestic appliance for starting a treatment process in the domestic appliance;
- assign (104), in response to the detection, one or more mobile terminals (4) of the user as a message recipient;
- perform (105) the treatment process in the domestic appliance (1); and
- send (106) status messages of the treatment process only to the assigned mobile terminals (4),
wherein the step of assigning one or more mobile terminals of the user as a message recipient comprises:
- detecting one or more mobile terminals (4) within communication range of the short-range wireless interface (2) of the domestic appliance, wherein the detected mobile terminal (4) that is closest to the domestic appliance (1) is assigned as the message recipient.

9. Domestic appliance (1) according to claim 8, wherein the domestic appliance (1) has a treatment chamber (5) that can be closed by a door (6) and a door sensor (7), and wherein the detection of a manual action comprises detecting door operation.

10. Domestic appliance (1) according to either of claims 8 to 9, further comprising an optical, acoustic or biometric sensor, wherein the detection of the manual action comprises detecting a personal feature of the user, wherein the personal feature includes at least one of
- optical feature;
- acoustic feature;
- biometric feature.

11. Domestic appliance (1) according to claim 10, wherein the control unit is further configured to
- identify (102) a user on the basis of the personal feature.

12. Domestic appliance (1) according to claim 11, further comprising:
- an internal database and/or external database and an interface to the external database, wherein the internal or external database stores links between users and mobile terminals (4); and
wherein the control unit (3) is further configured to
- access (103) the internal and/or external database, and wherein the mobile terminal(s) (4) of the identified user are assigned as the message receiver.

13. Domestic appliance (1) according to any of claims 8 to 12, wherein the domestic appliance (1) is a dishwasher, a washing machine, a dryer or a cooking appliance.

## Revendications

1. Procédé, comprenant :
- la détection (101) d'au moins une action manuelle d'un utilisateur sur un appareil ménager (1) pour le lancement d'un processus de traitement dans l'appareil ménager ;
- l'affectation (104), en réaction à la détection, d'un ou de plusieurs terminaux mobiles (4) de l'utilisateur en tant que récepteurs de messages ;
- la réalisation (105) du processus de traitement dans l'appareil ménager (1) ; et
- l'envoi (106) de messages d'état du processus de traitement uniquement aux terminaux mobiles (4) affectés ;
dans lequel l'étape d'affectation d'un ou de plusieurs terminaux mobiles de l'utilisateur en tant que récepteurs de messages comprend :
- la détection d'un ou de plusieurs terminaux mobiles (4) à portée de communication d'une interface sans fil à courte portée (2) de l'appareil ménager (1), dans lequel le terminal mobile (4) détecté qui est le plus proche de l'appareil ménager est affecté en tant que récepteur de messages.

2. Procédé selon la revendication 1, dans lequel l'appareil ménager présente un espace de traitement (5) pouvant être fermé par une porte (6) et la détection d'une action manuelle comprend la détection d'un actionnement de porte.

3. Procédé selon l'une quelconque des revendications précédentes, dans lequel la détection d'une action manuelle comprend la détection d'une caractéristique personnelle de l'utilisateur, dans lequel la caractéristique personnelle inclut au moins l'une parmi
- une caractéristique optique ;
- une caractéristique acoustique ;
- une caractéristique biométrique.

4. Procédé selon la revendication 3, comprenant en outre
- l'identification (102) d'un utilisateur à l'aide de la caractéristique personnelle.

5. Procédé selon la revendication 4, comprenant en outre
- l'accès (103) à une base de données interne et/ou externe qui mémorise les liens entre des utilisateurs et des terminaux mobiles ; et
dans lequel le ou les terminaux mobiles (4) de l'utilisateur identifié sont affectés en tant que récepteurs de messages.

6. Procédé selon la revendication 5, comprenant en outre
- l'envoi d'un message d'état à tous les terminaux mobiles (4) qui sont mémorisés dans la base de données dans le cas où aucune action manuelle n'est détectée pendant une période de temps pouvant être prédéfinie après l'envoi du message d'état.

7. Procédé selon la revendication 5 ou 6, comprenant en outre
- l'envoi d'une liste d'autres utilisateurs, conjointement avec un message d'état qui requiert une action manuelle, afin de permettre à l'utilisateur de transmettre ledit message d'état à l'un des autres utilisateurs.

8. Appareil ménager (1), présentant une interface (2) pour l'envoi de messages d'état et une unité de commande (3) qui est configurée pour
- la détection (101) d'au moins une action manuelle d'un utilisateur sur un appareil ménager pour le lancement d'un processus de traitement dans l'appareil ménager ;
- l'affectation (104), en réaction à la détection, d'un ou de plusieurs terminaux mobiles (4) de l'utilisateur en tant que récepteurs de messages ;
- la réalisation (105) du processus de traitement dans l'appareil ménager (1) ; et
- l'envoi (106) de messages d'état du processus de traitement uniquement aux terminaux mobiles (4) affectés,
dans lequel l'étape d'affectation d'un ou de plusieurs terminaux mobiles de l'utilisateur en tant que récepteurs de messages comprend :
- la détection d'un ou de plusieurs terminaux mobiles (4) à portée de communication de l'interface sans fil à courte portée (2) de l'appareil ménager, dans lequel le terminal mobile (4) détecté qui est le plus proche de l'appareil ménager (1) est affecté en tant que récepteur de messages.

9. Appareil ménager (1) selon la revendication 8, dans lequel l'appareil ménager (1) présente un espace de traitement (5) pouvant être fermé par une porte (6) et un capteur de porte (7) et dans lequel la détection d'une action manuelle comprend la détection d'un actionnement de porte.

10. Appareil ménager (1) selon l'une des revendications 8 à 9, présentant en outre un capteur optique, acoustique ou biométrique, dans lequel la détection de l'action manuelle comprend la détection d'une caractéristique personnelle de l'utilisateur, dans lequel la caractéristique personnelle inclut au moins l'une parmi
- une caractéristique optique ;
- une caractéristique acoustique ;
- une caractéristique biométrique.

11. Appareil ménager (1) selon la revendication 10, dans lequel l'unité de commande est en outre configurée pour
- l'identification (102) d'un utilisateur à l'aide de la caractéristique personnelle.

12. Appareil ménager (1) selon la revendication 11, présentant en outre :
- une base de données interne et/ou une base de données externe et une interface vers la base de données externe, dans lequel la base de données interne ou externe mémorise des liens entre des utilisateurs et des terminaux mobiles (4) ; et
dans lequel l'unité de commande (3) est en outre configurée pour
- l'accès (103) à la base de données interne et/ou à la base de données externe ; et dans lequel le ou les terminaux mobiles (4) de l'utilisateur identifié sont affectés en tant que récepteurs de messages.

13. Appareil ménager (1) selon l'une des revendications 8 à 12, dans lequel l'appareil ménager (1) est un lave-vaisselle, un lave-linge, un sèche-linge ou un appareil de cuisson.
